# EUROPÄISCHE PATENTSCHRIFT

(11) **EP 0 750 036 B1**
(45) Veröffentlichungstag und Bekanntmachung des Hinweises auf die Patenterteilung: **10.10.2001**
(21) Anmeldenummer: 96109079.2
(22) Anmeldetag: 05.06.1996
(51) Int. Cl.: C12C 7/17

(54) **Aufhackvorrichtung für einen Läuterbottich für die Biererzeugung**
Raking device in a clarifying vat for beer making
Dispositif de piochage des drêches d'une cuve filtre pour la fabrication de la bière

(30) Priorität: 23.06.1995 DE 29510245 U
(43) Veröffentlichungstag der Anmeldung: 27.12.1996
(73) Patentinhaber: Anton Steinecker Maschinenfabrik GmbH, 85356 Freising-Attaching (DE)
(72) Erfinder: Stippler, Kurt, Dr., 85417 Marzling (DE); Wasmuht, Klaus, 91792 Ellingen (DE)
(74) Vertreter: Grünecker, Kinkeldey, Stockmair & Schwanhäusser Anwaltssozietät

(56) Entgegenhaltungen:
- DE-B- 1 048 547
- DE-C- 3 528 647
- FR-A- 382 006

## Beschreibung

Die Erfindung betrifft eine Aufhackvorrichtung für einen Läuterbottich für die Biererzeugung mit einer vertikalen Antriebswelle an der wenigstens ein horizontaler Ausleger befestigt ist, wobei je Ausleger wenigstens ein nach unten gerichtetes Aufhackmesser angeordnet ist, das im Treberkuchen umläuft und eine Auflockerung bewirkt.

Bekannterweise lagert sich beim Abläutervorgang der Würze im Läuterbottich der Treberkuchen am Senkboden des Läuterbottichs ab. Mit zunehmender Läuterzeit verdichtet sich der Treberkuchen, so daß ein Auflockern mit sogenannten Aufhackmessern notwendig wird, um weiteren Würzeabfluß durch den Treberkuchen hindurch zu ermöglichen.

Eine Aufhackvorrichtung der eingangs genannten Art ist z.B. aus der DE-PS 35 28 647 bekannt. Hierbei rotieren mehrere Reihen von Aufhackmessern, die an Auslegern (Tragarmen) befestigt sind, in bestimmten Kreisbahnen im Treberkuchen und in der Würze. Es sind dort einige Reihen von geraden, mit Quermessern versehene Aufhackmesser sowie mehrere Reihen von zick-zack-artig gewellten Aufhackmessern vorhanden.

Da die bekannten Aufhackmesser in Kreisbahnen umlaufen, bewirken sie eine in Kreisbahnen erfolgende Auflockerung des Treberkuchens, jedoch ist die Gleichmäßigkeit der Lockerungswirkung dadurch nicht gewährleistet.

Aufgabe der Erfindung ist es daher, die bekannte Aufhackvorrichtung hinsichtlich der gleichmäßigeren Auflockerung der gesamten Treberkuchenschicht zu verbessern.

Diese Aufgabe wird dadurch gelöst, daß wenigstens an einem unteren Endbereich der Aufhackmesser eine in Bewegungsrichtung nach rückwärts weisende Wendeeinrichtung vorgesehen ist, die den Treberkuchen zumindest teilsweise wendet. Diese nach hinten weisenden Wendeeinrichtungen bewirken ein Umschichten und Umwenden des Treberkuchens, was sich auch seitlich auf die Bereiche zwischen den Aufhackmessern auswirkt, so daß insgesamt über die Breite des Treberkuchens eine gleichmäßigere Umschichtung und Auflockerung erreicht wird.

Vorzugsweise weist die Aufhackvorrichtung zick-zack-förmige bzw. gewellte und gerade Aufhackmesser auf, wobei die Wendeeinrichtungen vorzugsweise an den geraden Aufhackmessern vorgesehen sind.

Die Wendeeinrichtung ist vorteilhafterweise paddelförmig ausgebildet und wird daher nachfolgend als Wendepaddel bezeichnet.

In vorteilhafter Weiterbildung der Erfindung sind die Wendepaddel um eine Achse tordiert, die im wesentlichen der Bewegungsrichtung der Aufhackmesser entspricht. Das hat zur Folge, daß die Wendepaddel mit paralleler Außenfläche zum Längsmesser am Längsmesser befestigt sind und im weiteren Verlauf nach hinten etwas gewunden verlaufen.

In bevorzugter Ausführungsform sind zwei Wendepaddel je Aufhackmesser vorgesehen, so daß die beiden Wendepaddel mit dem sie verbindenen Abschnitt des Aufhackmessers im wesentlichen die Form eines liegenden U's aufweisen. Die beiden übereinander an einem Aufhackmesser befestigten Wendepaddel sind relativ zueinander gegensinnig verdreht angeordnet. Somit erlauben die zwei übereinander angeordneten Wendepaddel ein teilweises Wenden in verschiedenen Höhenschichten des Treberkuchens sowie ein vorsichtiges Hin- und Herwenden des Treberkuchens entlang der gegensinnig verdrehten Wendepaddel. Ein derartiges doppeltes Wenden des Treberkuchens bewirkt eine noch erhöhte Vergleichmäßigung der Treberkuchenschicht.

In vorteilhafter Weise sind die Wendepaddel um etwa 45° tordiert. Eine dementsprechende teilweise Wendung des Treberkuchens führt zu einer besonders homogenen Ausbildung des Treberkuchens.

In weiterer vorteilhafter Ausbildung der Erfindung sind die Achsen, um die die Wendepaddel tordiert sind, in Bewegungsrichtung nach vorne-unten geneigt und schließen einen Winkel von etwa 5° mit der Horizontalen ein. Diese grundsätzliche Neigung der Wendepaddel nach vorne zum Senkboden hin entspricht der Neigung der Unterseite der Aufhackschuhe am geraden Aufhackmesser und ebenfalls der Neigung der seitlich am Aufhackmesser befestigten Quermesser.

Vorzugsweise weist ein unterster Bereich des unteren Wendepaddels und des oberen Wendepaddels zu einer untersten Kante des Aufhackmessers einen Abstand von etwa 3 - 8 cm bzw. 10 - 15 cm auf, so daß die Achsen der Wendepaddel auf einer Höhe angeordnet sind, auf der seitlich am geraden Aufhackmesser die zwei untersten Quermesser vorgesehen sind. Dies bedeutet, bei einer üblichen Treberkuchentiefe von 25 bis maximal 30 cm ein besonders tiefes Auflockern und Wenden, wobei die Anordnung der Quermesser auf mittlerer Höhe der Wendepaddel das Auflockerungsergebnis besonders günstig beeinflußt.

In vorteilhafter Ausgestaltung der Erfindung sind die zick-zack-förmigen Aufhackmesser ausschließlich etwa im unteren Drittel relativ zur Gesamtlänge zick-zack-förmig oder gewellt ausgebildet. Dies erlaubt ebenfalls ein besonders tiefes Aufhacken des Treberkuchens, wobei die obenauf schwimmende Würze durch das Rotieren der Aufhackmesser nicht unnötig verwirbelt und getrübt wird, da der zick-zack-förmige bzw. gewellte Abschnitt des Aufhackmessers im wesentlichen der maximal zu erwartenden Treberkuchentiefe entspricht und somit im Würzebereich im wesentlichen keine die Homogenität der Würze störenden zick-zack-förmigen Aufhackmesser umlaufen.

Im folgenden wird ein Ausführungsbeispiel der Erfindung anhand der Figuren näher erläutert. In diesen zeigen:
- Figur 1: schematisch einen Längsschnitt einer Aufhackvorrichtung in einem Läuterbottich nach der Erfindung,
- Figur 2: eine Vorderansicht eines geraden Aufhackmessers nach Figur 1,
- Figur 3: eine Seitenansicht eines Aufhackmessers nach Figur 2,
- Figur 4a: einen Horizontalschnitt entlang der Linie A-A in Figur 2,
- Figur 4b: einen Horizontalschnitt entlang der Linie B-B in Figur 2,
- Figur 5: eine Vorderansicht des Wendepaddels nach Figur 1,
- Figur 6: eine Seitenansicht des Wendepaddels nach Figur 1,
- Figur 7: eine Draufsicht eines zick-zack-förmigen Aufhackmessers nach Figur 1,
- Figur 8: eine Vorderansicht eines Aufhackmessers nach Figur 7, und
- Figur 9: eine Seitenansicht des Aufhackmessers nach Figur 7.

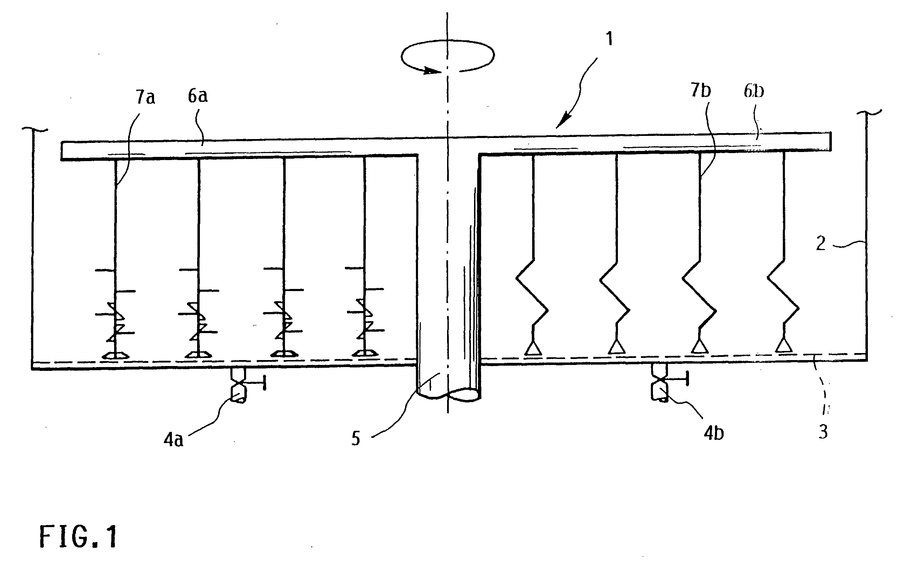

Die Figur 1 zeigt schematisch einen Längsschnitt durch die untere Hälfte eines Läuterbottichs. Eine Aufhackvorrichtung 1 ist im Bottich 2 aufgenommen. Etwas oberhalb des Bottichbodens ist ein siebartiger Senkboden 3 und unterhalb des Bottichbodens sind Sammelleitungen 4a, 4b angeordnet, durch die die abgeläuterte Würze abgeleitet wird.

Die Aufhackvorrichtung 1 weist eine zentrale Antriebswelle 5 auf, an deren oberen Endbereich balkenartige, horizontale Ausleger 6a, 6b befestigt sind. Die Vielzahl der Ausleger, von denen in der Figur 1 nur zwei dargestellt sind, läuft sternartig zur Antriebswelle 5 zusammen. Eine Reihe vertikal nach unten gerichteter seitlich zueinander beabstandeter Aufhackmesser ist jeweils an den Auslegern 6a, 6b befestigt. Der Ausleger 6a in Figur 1 trägt mehrere gerade Aufhackmesser 7a und der Ausleger 6b trägt mehrere zick-zack-förmige bzw. gewellte oder gekröpfte Aufhackmesser 7b. Mittels eines in der Figur 1 nicht dargestellten Antriebsmotors kann die Aufhackvorrichtung 1 über die Antriebswelle 5 sowohl in eine Rotations- als auch in eine Auf- und Abbewegung versetzt werden. Bei einer Rotation der Aufhackvorrichtung 1 im Läuterbottich laufen somit die Aufhackmesser 7a und 7b in Kreisbahnen mit verschiedenen Radien im Treberkuchen um.

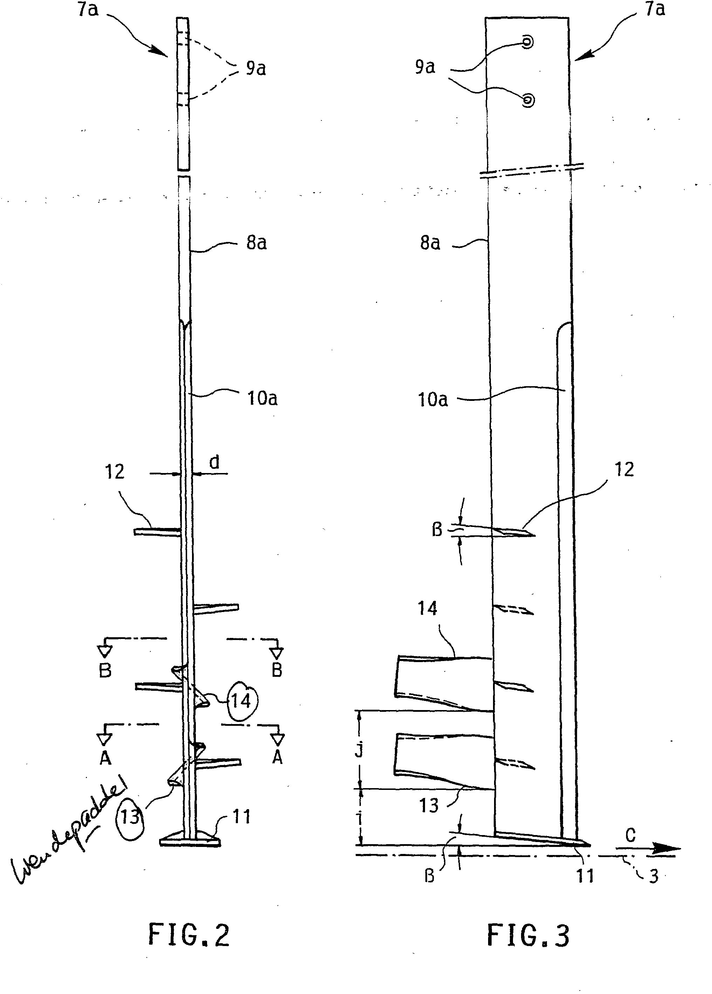

Die Figuren 2 und 3 zeigen eines der geraden Aufhackmesser 7a von vorne und von der Seite. Der Grundkörper der geraden Aufhackmesser 7a besteht aus einem streifenartigen Quermesser 8a, das im oberen Endbereich Befestigungsbohrungen 9a zur Befestigung am Ausleger 6a aufweist. Etwa an der unteren Hälfte entlang der in Bewegungsrichtung vorderen Kante des Längsmessers ist eine Messerschneide 10a zum Aufhacken des Treberkuchens ausgebildet (die Bewegungsrichtung des Aufhackmessers 7a ist in Figur 3 mit dem Pfeil C dargestellt). Am unteren Ende des Längsmessers 8a ist ein in Bewegungsrichtung nach vorne unten geneigter, flacher Aufhackschuh 11 befestigt. Seitlich am unteren Drittel des Längsmessers 8a sind beiderseits Quermesser 12 im 90°-Winkel zum Längsmesser 8a abstehend befestigt. Die Quermesser 12 sind ebenfalls nach in Bewegungsrichtung vorne-unten leicht geneigt angeordnet. Es sind auf jeder Seite des Längsmessers zwei Quermesser 12 untereinander vorgesehen, die zu den zwei Quermessern der anderen Seite des Längsmessers 8a versetzt angeordnet sind.

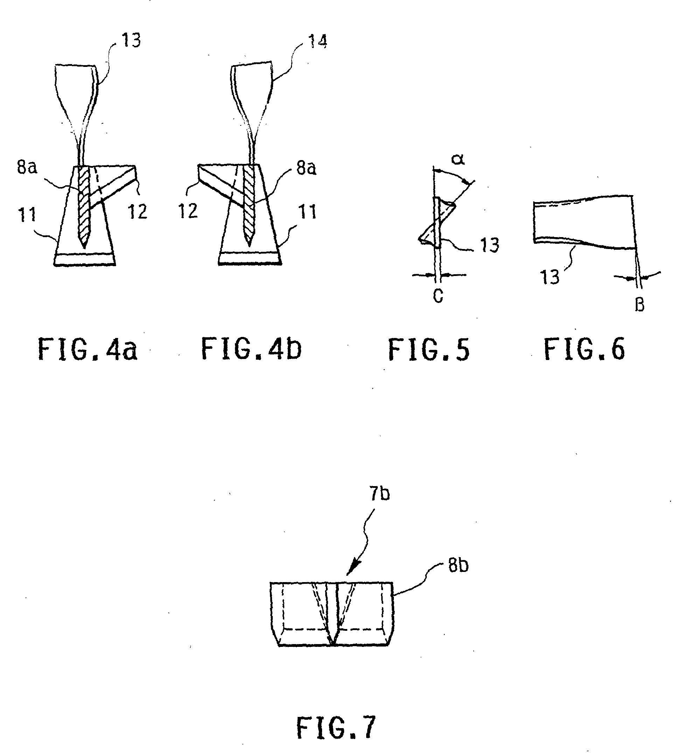

Etwa am unteren Viertel der in Bewegungsrichtung hinteren Kante des Längsmessers 8a sind zwei übereinander angeordnete Wendepaddel 13, 14 am Längsmesser 8a befestigt. Die Wendepaddel 13, 14 sind relativ zueinander spiegelbildlich ausgebildet. Jedes der Wendepaddel 13, 14 ist - wie in Figur 5 und 6 gezeigt - aus einem streifenartigen Grundkörper gebildet, der in Längsrichtung nach hinten tordiert ist, so daß die in Bewegungsrichtung vordere Kante der Wendepaddel 13, 14 bündig an der Hinterkante der Längsmesser 8a befestigt ist und die in Bewegungsrichtung hintere Kante der Wendepaddel 13, 14 in einem Winkel α zur vorderen Kante der Wendepaddel 13, 14 verdreht ist. Wie in Figur 2 gezeigt, sind die beiden Wendepaddel 13, 14 in einer derartigen Höhe am Endabschnitt des Längsmessers 8a angeordnet, so daß eine Mittelachse durch das Wendepaddel 13, 14 etwa auf gleicher Höhe angeordnet ist wie eine Mittelachse eines benachbarten Quermessers 12. Das untere Wendepaddel 13 ist in einem Abstand von etwa i = 3 - 8 cm von der untersten Kante des Aufhackmessers 7a angeordnet. Der Abstand zwischen beiden Wendepaddeln 13, 14 ist mit etwa j = 5 - 10 cm vorgesehen. Die Mittelachse des Quermessers 12 und die der Wendepaddel 13, 14 ist leicht nach vorne-unten geneigt und im wesentlichen in Bewegungsrichtung C gerichtet. Somit sind die Wendepaddel 13, 14 ebenfalls in Bewegungsrichtung nach vorne-unten geneigt, so daß das Streifenmaterial für die Wendepaddel 13, 14, wie in Figur 6 gezeigt, abweichend von der Rechteckform entlang der in Bewegungsrichtung vorderen Kante eine keilförmige Weglassung aufweist, die eine entsprechend geneigte Anbringung der Wendepaddel 13, 14 an dem Längsmesser 8a bewirkt. Der Aufhackschuh 11, die Quermesser 12 und die Wendepaddel 13, 14 sind etwa um den Winkel β = 5° nach vorne-unten geneigt.

Die Figuren 4a und 4b zeigen das Aufhackmesser 7a in einem Horizontalschnitt entlang den Linien A-A und B-B in Figur 2. Wie aus diesen Draufsichtschnittdarstellungen hervorgeht, sind die Wendepaddel 13, 14 jeweils bündig zu der Seite der Längsmesser 8a angeordnet, die den auf gleicher Höhe angeordneten Quermessern 12 gegenüberliegt. Die Wendepaddel sind relativ zueinander gegensinnig verdreht, so daß das untere Wendepaddel 13 im Winkel α = 45° tordiert ist, und das darüberliegende Wendepaddel 14 im Winkel -α = - 45° gewunden ist. Die Wendepaddel 13, 14 weisen eine Materialstärke c auf, die halb so groß ist wie die Dicke d der Aufhackleiste 8a.

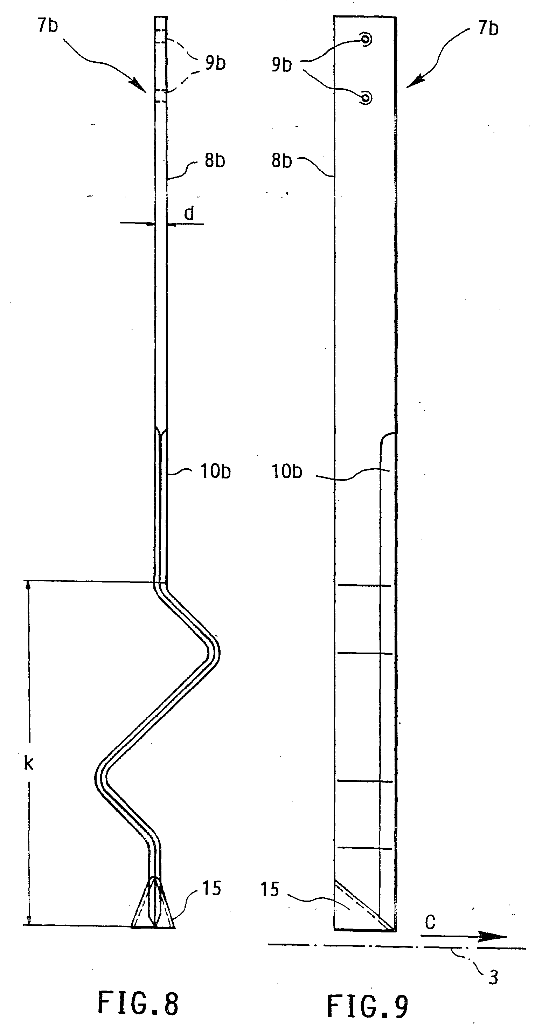

Das in den Figuren 7 bis 9 gezeigte Zick-Zack-Aufhackmesser 7b besteht ebenfalls aus einem Längsmesser 8b, an dessen oberem Endabschnitt Befestigungsbohrungen 9b und an dessen unterer Hälfte entlang der Vorderkante eine Messerschneide 10b vorgesehen ist. Am zum Senkboden hin weisenden unteren Ende des Längsmessers 8b ist ein Aufhackschuh 15 in bekannter Weise vorgesehen.

Das Aufhackmesser 7b ist im unteren Drittel relativ zur Gesamtlänge des Aufhackmessers 7b zick-zack-förmig bzw. gewellt ausgebildet. Der Abstand zwischen der untersten Kante des Aufhackmesser 7b zum obersten Zick-Zack-Knick beträgt etwa k = 30 - 40 cm. Von einem oberen ersten, vertikalen Abschnitt des Aufhackmessers 7b ausgehend, ist die Aufhackleiste 8b zunächst in einem zweiten Abschnitt zur Seite um 45° gebogen. Im Anschluß an den zweiten Abschnitt ist das Längsmesser zu einem dritten Abschnitt hin um 90° nach unten zur anderen Seite hin gebogen und erstreckt sich ebenso weit nach außen zur Seite wie sich die Biegestelle zwischen zweiten und dritten Abschnitt seitlich nach außen erstreckt. Im Anschluß an den dritten Abschnitt ist das Längsmesser 8b mit einem vierten Abschnitt fortgesetzt, der parallel zum zweiten Abschnitt verläuft und ebenso lang wie dieser ausgebildet ist. Die Biegung zwischen dem dritten und dem vierten Abschnitt beträgt ebenfalls etwa 90°. Mit etwa einer 45°-Biegung geht dieser gewellte Abschnitt wieder in einen fünften, vertikalen Abschnitt über, der direkt unterhalb des ersten vertikalen Abschnittes des Längsmessers 8b angeordnet ist.

Die Wirkungsweise der Aufhackvorrichtung wird nachfolgend kurz beschrieben. Die Aufhackvorrichtung wird während des Abläutervorganges in einen Läuterbottich auf die dem Verfahrensstadium entsprechende Höhe im Läuterbottich eingestellt und in Rotation versetzt, sobald sich der Treberkuchen zu sehr verdichtet. An jedem Ausleger 6a, 6b der Aufhackvorrichtung sind jeweils gleichartige Aufhackmesser 7a, 7b befestigt, so daß bei Rotation der Aufhackvorrichtung 1 die zick-zack-förmigen oder gewellten Aufhackmesser 7b in mehreren Kreisbahnen mit unterschiedlichem Radius den Treberkuchen ebenfalls zick-zack-förmig bzw. gewellt auflockern. Eine zusätzliche Auflockerung des Treberkuchens erfolgt entlang der Außenkontur der Aufhackschuhe 15. Dabei bleibt die darüber schwimmende Würze relativ homogen und beruhigt. Die geraden Aufhackmesser 7a schneiden den Treberkuchen entlang der Längsmesser, der Quermesser 12 und des flachen Aufhackschuhes 11 auf, wobei die Aufhackschuhe 15, 11 in der tiefsten Stellung sich kanpp oberhalb des Senkbodens 3 bewegen (etwa 1 cm). Zusätzliche Auflockerung des Treberkuchens geschieht durch ein vorsichtiges Hin- und Herwenden des Treberkuchens entlang der Kontur der Wendepaddel 13, 14, wobei ein zu rasches und damit zu wenig gefiltertes Abfließen der Würze vor allem entlang der vertikalen Aufhackung durch das Wenden des Treberkuchens in diesem Bereich entlang der Wendepaddel 13, 14 wirksam verhindert ist. Somit ist ein besonders homogenes Aufhacken bzw. Auflockern des Treberkuchens gegeben, so daß die gewonnene Würze in ebenfalls gleichförmig geringem Ausmaß eingetrübt ist.

## Patentansprüche

1. Aufhackvorrichtung für einen Läuterbottich für die Biererzeugung mit einer vertikalen Antriebswelle an der wenigstens ein horizontaler Ausleger befestigt ist, wobei je Ausleger wenigstens ein nach unten gerichtetes Aufhackmesser angeordnet ist, das im Treberkuchen umläuft und eine Auflokkerung bewirkt, **dadurch gekennzeichnet, daß** wenigstens an einem unteren Endbereich der Aufhackmesser (7a) eine in Bewegungsrichtung (C) nach rückwärts weisende Wendeeinrichtung (13, 14) vorgesehen ist, die den Treberkuchen zumindest teilweise wendet.

2. Aufhackvorrichtung nach Anspruch 1, **dadurch gekennzeichnet, daß** die Aufhackvorrichtung (1) zick-zack-förmig bzw. gewellte und gerade Aufhackmesser (7b, 7a) aufweist, und daß die wenigstens eine Wendeeinrichtung (13, 14) an den geraden Aufhackmessern (7a) vorgesehen ist.

3. Aufhackvorrichtung nach Anspruch 1 oder 2, **dadurch gekennzeichnet, daß** die wenigstens eine Wendeeinrichtung (13, 14) paddelförmig als Wendepaddel ausgebildet ist.

4. Aufhackvorrichtung nach wenigstens einem der vorangegangenen Ansprüche, **dadurch gekennzeichnet, daß** die Wendepaddel (13, 14) um eine Achse tordiert sind, die im wesentlichen der Bewegungsrichtung (C) der Aufhackmesser (7a) entspricht.

5. Aufhackvorrichtung nach wenigstens einem der vorangegangenen Ansprüche, **dadurch gekennzeichnet, daß** zwei Wendepaddel je Aufhackmesser (7a) vorgesehen sind, so daß die beiden Wendepaddel (13, 14) mit dem verbindenden Abschnitt des Aufhackmesser (7a) im wesentlichen eine liegende U-Form aufweisen.

6. Aufhackvorrichtung nach wenigstens einem der vorangegangenen Ansprüche, **dadurch gekennzeichnet, daß** die beiden übereinander an einem Aufhackmesser (7a) befestigten Wendepaddel (13, 14) relativ zueinander gegensinnig verdreht angeordnet sind.

7. Aufhackvorrichtung nach wenigstens einem der vorangegangenen Ansprüche, **dadurch gekennzeichnet, daß** die Wendepaddel (13, 14) um etwa α = 45° tordiert sind.

8. Aufhackvorrichtung nach wenigstens einem der vorangegangenen Ansprüche, **dadurch gekennzeichnet, daß** die Achsen um die die Wendepaddel (13, 14) tordiert sind, in Bewegungsrichtung (C) im wesentlichen nach vorne-unten geneigt sind und einen Winkel von etwa β = 5° mit der Horizontalen einschließen.

9. Aufhackvorrichtung nach wenigstens einem der vorangegangenen Ansprüche, **dadurch gekennzeichnet, daß** ein unterster Abschnitt des unteren Wendepaddels (13) und des oberen Wendepaddels (14) zu einer untersten Kante des Aufhackmessers (7a) einen Abstand von etwa 3 - 8 cm bzw. 10 - 15 cm aufweisen, so daß die Achse der Wendepaddel (13, 14) auf einer Höhe angeordnet ist, auf der seitlich am geraden Aufhackmesser (7a) zwei untere Quermesser (12) vorgesehen sind.

10. Aufhackvorrichtung nach Anspruch 2, **dadurch gekennzeichnet, daß** die zick-zack-förmigen Aufhackmesser (7b) ausschließlich etwa im unteren Drittel relativ zur Gesamtlänge zick-zack-förmig oder gewellt ausgebildet sind.

## Claims

1. Chopping device for a clarifying vat for beer production, having a vertical drive shaft on which at least one horizontal extension arm is fastened, at least one downwardly directed chopping blade being provided for each extension arm, and this blade circulating in the mash and loosening the same, **characterized in that** provided at least at a bottom end region of the chopping blades (7a) is a turning arrangement (13, 14) which is oriented rearwards in the movement direction (C) and at least partially turns the mash.

2. Chopping device according to Claim 1, **characterized in that** the chopping device (1) has zigzag-shaped and/or undulating and rectilinear chopping blades (7b, 7a), and **in that** the at least one turning arrangement (13, 14) is provided on the rectilinear chopping blades (7a).

3. Chopping device according to Claim 1 or 2, **characterized in that** the at least one turning arrangement (13, 14) is designed in a paddle-like manner, as a turning paddle.

4. Chopping device according to at least one of the preceding claims, **characterized in that** the turning paddles (13, 14) are twisted about an axis which corresponds essentially to the movement direction (C) of the chopping blades (7a).

5. Chopping device according to at least one of the preceding claims, **characterized in that** two turning paddles are provided for each chopping blade (7a), with the result that the two turning paddles (13, 14), with the connecting section of the chopping blade (7a), are essentially in the form of a horizontal U.

6. Chopping device according to at least one of the preceding claims, **characterized in that** the two turning paddles (13, 14), which are fastened one above the other on a chopping blade (7a), are arranged in a state in which they have been rotated in opposite directions relative to one another.

7. Chopping device according to at least one of the preceding claims, **characterized in that** the turning paddles (13, 14) are twisted through approximately α = 45°.

8. Chopping device according to at least one of the preceding claims, **characterized in that** the axes about which the turning paddles (13, 14) are twisted are inclined essentially forwards/downwards in the movement direction (C) and enclose an angle of approximately β = 5° with the horizontal.

9. Chopping device according to at least one of the preceding claims, **characterized in that** a lowermost section of the bottom turning paddle (13) and of the top turning paddle (14) is spaced apart from a lowermost edge of the chopping blade (7a) by a distance of approximately 3 - 8 cm and 10 - 15 cm, respectively, with the result that the axis of the turning paddles (13, 14) is arranged at a level at which two bottom transverse blades (12) are provided laterally on the rectilinear chopping blade (7a).

10. Chopping device according to Claim 2, **characterized in that** the zigzag-shaped chopping blades (7b) are of zigzag-shaped or undulating design solely in the approximately bottom third relative to the overall length.

## Revendications

1. Dispositif de piochage destiné à une cuve filtre pour la fabrication de bière, comportant un arbre d'entraînement vertical sur lequel est fixé au moins un bras horizontal, au moins un couteau de piochage orienté vers le bas, qui circule dans les drêches et génère une désagrégation, étant monté sur chaque bras,
**caractérisé en ce qu'**un dispositif de retournement (13, 14) orienté vers l'arrière dans le sens du déplacement (C) est prévu sur au moins une zone d'extrémité inférieure des couteaux de piochage (7a).

2. Dispositif de piochage selon la revendication 1,
**caractérisé en ce que** le dispositif de piochage (1) présente des couteaux de piochage (7b, 7a) profilés en zigzag ou ondulés et droits, et **en ce qu'**au moins un dispositif de retournement (13, 14) est prévu sur les couteaux de piochage (7a) droits.

3. Dispositif de piochage selon la revendication 1 ou 2,
**caractérisé en ce que** le au moins un dispositif de retournement (13, 14) est conformé en ailette, en tant qu'ailette de retournement.

4. Dispositif de piochage selon au moins l'une des revendications précédentes, **caractérisé en ce que** les ailettes de retournement (13, 14) sont enroulées autour d'un axe, qui correspond essentiellement au sens du déplacement (C) des couteaux de piochage (7a).

5. Dispositif de piochage selon au moins l'une des revendications précédentes, **caractérisé en ce que** deux ailettes de retournement sont prévues par couteau de piochage (7a), de sorte qu'avec la section de couteau de piochage (7a) qui les relie, les deux ailettes de retournement (13, 14) présentent essentiellement la forme d'un U couché.

6. Dispositif de piochage selon au moins l'une des revendications précédentes, **caractérisé en ce que** les deux ailettes de retournement (13, 14) fixées l'une au-dessus de l'autre sur un couteau de piochage (7a) sont disposées enroulées en sens contraire l'une de l'autre.

7. Dispositif de piochage selon au moins l'une des revendications précédentes, **caractérisé en ce que** les ailettes de retournement (13, 14) sont enroulées sensiblement sur un angle α = 45°.

8. Dispositif de piochage selon au moins l'une des revendications précédentes, **caractérisé en ce que** les axes autour desquels sont enroulées les ailettes de retournement (13, 14) sont inclinés en avant vers le bas dans le sens du déplacement (C) en formant sensiblement un angle β = 5° par rapport à l'horizontale.

9. Dispositif de piochage selon au moins l'une des revendications précédentes, **caractérisé en ce qu'**une zone la plus basse de l'ailette de retournement inférieure (13) et de l'ailette de retournement supérieure (14) marque par rapport à une arête la plus basse du couteau de piochage (7a) un écartement de respectivement 3 à 8 cm ou 10 à 15 cm environ, de sorte que l'axe des ailettes de retournement (13, 14) est situé à une hauteur à laquelle les deux couteaux transversaux inférieurs (12) sont prévus latéralement sur le couteau de piochage droit (7a).

10. Dispositif de piochage selon la revendication 2,
**caractérisé en ce que** les couteaux de piochage (7b) profilés en zigzag ne sont profilés en zigzag ou ondulés que sensiblement sur le tiers inférieur par rapport à la longueur totale.
